# EUROPÄISCHE PATENTANMELDUNG

(11) **EP 2 940 924 A1**
(43) Veröffentlichungstag der Anmeldung: **04.11.2015**
(21) Anmeldenummer: 15157318.5
(22) Anmeldetag: 03.03.2015
(51) Int. Cl.: H04L 9/08, H04L 9/32

(54) **PUF basierende Ableitung eines gerätespezifischen Wertes**

(30) Priorität: 30.04.2014 DE 102014208212
(71) Anmelder: Siemens Aktiengesellschaft, 80333 München (DE)
(72) Erfinder: Falk, Rainer, 85586 Poing (DE); Mucha, Andreas, 81375 München (DE)

(57) **Zusammenfassung**

Die Erfindung betrifft ein Verfahren und eine Vorrichtung zum Ableiten eines gerätespezifischen Wertes aus einer auf einem Gerät realisierten physikalisch unklonbaren Funktion, wobei aus Challenges abgeleiteten Responses Kategorisierungsinformationen zugeordnet werden. Die Kategorisierungsinformationen werden aus statistischen Schwankungen abgeleitet. Der gerätespezifische Wert kann als Schlüsselbit oder als Identifizierer weiterverarbeitet werden.

## Beschreibung

Die Erfindung betrifft ein Verfahren zum Ableiten eines gerätespezifischen Wertes aus einer auf einem Gerät realisierten physikalisch unklonbaren Funktion aus Kategorisierungsinformationen sowie eine Vorrichtung mit einer Schaltkreiseinheit aufweisend mindestens eine physikalisch unklonbare Funktion zum Ableiten eines gerätespezifischen Wertes aus Kategorisierungsinformationen.

Physikalisch unklonbare Funktionen, sogenannte Physical Unclonable Functions, sind bekannt, um Objekte zuverlässig anhand ihrer intrinsischen physikalischen Eigenschaften zu identifizieren. Eine physikalische Eigenschaft eines Gegenstandes, beispielsweise eines Halbleiter-Schaltkreises, wird dabei als individueller Fingerabdruck verwendet. Eine physikalisch unklonbare Funktion wird mit einer Challenge beaufschlagt und liefert eine Response, welche bei einem Nachbau des Gerätes bei Beaufschlagen mit der gleichen Challenge nicht generierbar sein soll. Eine Response soll nicht vorhersehbar sein und somit nicht - auch nicht bei Kenntnis der Challenge - auf einem anderen, nachgebautem Schaltkreis erzeugt werden können. Somit kann eine Authentifizierung mittels der physikalisch unklonbaren Funktion erreicht werden, indem beispielsweise eine Response oder ein daraus abgeleiteter Wert wie beispielsweise ein kryptographischer Schlüssel, nur generiert werden kann, falls ein Zugriff auf den unveränderten, nicht manipulierten Schaltkreis mit der darauf implementierten physikalisch unklonbaren Funktion vorhanden ist.

Ebenso kann mittels einer physikalisch unklonbaren Funktion geprüft werden, ob es sich bei einem Gerät oder einem Halbleiter-Schaltkreis um ein Originalprodukt handelt, wobei auch hier beispielsweise eine Response ausgewertet wird, welche nicht auf einem nachgebauten oder manipulierten Gerät oder Halbleiter-Schaltkreis generiert werden kann.

Im Umfeld kryptographischer Security-Mechanismen ist die Verwendung physikalisch unklonbarer Funktionen vorgesehen, um ein Abspeichern eines kryptographischen Schlüssels in einem Speicher oder ein manuelles Eingeben des Schlüssels zu vermeiden. Das Erzeugen eines kryptographischen Schlüssels durch Beaufschlagen einer physikalisch unklonbaren Funktion mit einer Challenge stellt einen sicheren Schlüsselspeicher dar.

Im Umfeld der Erzeugung kryptographischer Schlüssel sowie bei der Verwendung einer physikalisch unklonbaren Funktion zur Identitätsüberprüfung oder Originalitätsprüfung besteht ein Bedarf, einen gerätespezifischen oder hardwarespezifischen Identifizierer reproduzierbar bereitzustellen.

Dazu werden im Stand der Technik physikalisch unklonbare Funktionen bzw. Challenges, mit welchen die physikalisch unklonbare Funktion beaufschlagt wird, in einer Initialisierungsphase auf ihre Tauglichkeit zur Verwendung für eine Schlüsselableitung oder Authentizitätsprüfung hin getestet. Es ist dabei insbesondere allgemein bekannt, eine sogenannte SRAM-PUF (Static Random Access Memory-PUF) zu verwenden, wobei ein Initialzustand von Speicherzellen als gerätespezifische Eigenschaft verwendet wird. Dafür muss zunächst überprüft werden, welche Speicherzellen stabil sind. Nur stabile Zellen werden für die folgende Ermittlung eines Schlüssels oder Identifizierers verwendet.

Bei der Verwendung physikalisch unklonbarer Funktionen zur Erzeugung kryptographischer Schlüssel werden sogenannte Fuzzy Key Extractors verwendet, welche unter Zuhilfenahme von Hilfsdatensätzen ein Fehlerkorrekturcodeverfahren realisieren. Die Erzeugung der Hilfsdaten ist aufwendig und das Abspeichern erzeugter Hilfsdatensatze muss in geeigneten Speicherbausteinen erfolgen. Nur so kann eine reproduzierbare und gesicherte Generierung eines kryptographischen Schlüssels sichergestellt werden. Gleichzeitig dürfen die Hilfsdaten keinen Hinweis auf den Schlüssel enthalten, so dass ein Fehlerkorrekturcode aufwendig zu erstellen ist.

Unabhängig davon, ob zur Erzeugung eines gerätespezifischen kryptographischen Schlüssels oder Identifizierers die rohen Responsewerte einer physikalische unklonbaren Funktion oder nachbearbeitete Responses verwendet werden, stellt sich in der Praxis häufig das Problem, dass die erhaltenen Bitwerte einer physikalisch unklonbaren Funktion einen sogenannten Bias haben, d.h. überwiegend entweder zu Bitwerten von 0 oder zu Bitwerten von 1 tendieren. Die informationstheoretische Entropie pro Datenbit ist also geringer als 1 Bit. Für die Nachbearbeitung von Responses einer physikalisch unklonbaren Funktion sind mehr Daten als Input nötig, als als Output erzielt werden können. Um ein bestimmtes Niveau an Sicherheit zu erreichen, ist also auch in Hinblick auf die Entropie pro Datenbit ein aufwendiges Nachbearbeitungsverfahren nötig. Weist eine PUF-Konfiguration eine starke Tendenz der Responses zu einem Bitwert auf, d.h. beispielsweise Tendenz zu 0 für die Bits einer mehrbittigen Response, so ist ein Schlüsselerraten vereinfacht möglich und die Sicherheit eines kryptographischen Verfahrens reduziert. Auch für die Unterscheidung unterschiedlicher Geräte oder eine Integritätsprüfung muss entsprechend verhindert werden, dass das gleiche Bitmuster mehrfach auftritt.

Vor diesem Hintergrund ist es Aufgabe der vorliegenden Erfindung, ein vereinfachtes Ableiten eines gerätespezifischen Wertes mittels einer physikalisch unklonbaren Funktion, insbesondere ohne Notwendigkeit eines Fehlerkorrekturcodeverfahrens, zu ermöglichen.

Diese Aufgabe wird durch die angegebenen unabhängigen Ansprüche gelöst. Vorteilhafte Ausgestaltungen und Weiterbildungen sind in den Unteransprüchen angegeben.

Erfindungsgemäß weist ein Verfahren zum Ableiten eines gerätespezifischen Wertes aus einer auf einem Gerät realisierten physikalisch unklonbaren Funktion die folgenden Schritte auf:
- Ermitteln einer ersten Response aus einem mindestens einmaligen Beaufschlagen der physikalisch unklonbaren Funktion mit einer ersten Challenge;
- Ermitteln mindestens einer zweiten Response aus einem mindestens einmaligen Beaufschlagen der physikalisch unklonbaren Funktion mit einer zweiten Challenge;
- Ableiten einer jeweiligen Kategorisierungsinformation aus einer jeweiligen Response durch ein Zuordnen der jeweiligen Response zu einer von mindestens zwei jeweiligen Kategorien hinsichtlich einer statistischen Schwankung, wobei eine jeweilige Kategorie durch mindestens einen vorgebbaren Schwellenwert festgelegt wird;
- Ableiten des gerätespezifischen Wertes aus mindestens zwei der jeweiligen Kategorisierungsinformationen.

Die physikalisch unklonbare Funktion, auch Physical Unclonable Function und im Folgenden kurz PUF genannt, wird in dem vorgeschlagenen Verfahren verwendet, ohne zuvor das Verhalten von verschiedenen Responses zu verschiedenen Challenges geprüft zu haben oder ohne vorher unterschiedliche Konfigurationen der PUF geprüft zu haben. Auch eine PUF, welche zunächst ungeeignet erscheint, eine reproduzierbare Response zu erzeugen oder eine PUF, für welche zur Erzeugung eines reproduzierbaren gerätespezifischen Wertes ein Fehlerkorrekturcodeverfahren notwendig ist, wird gemäß dem vorgeschlagenen Verfahren verwendet. Unabhängig von einer Stabilität einer Response bei mehrmaligem Beaufschlagen mit einer Challenge oder unabhängig davon, ob eine Response zu einer Challenge einen Bias zu 0 oder zu 1 aufweist, wird eine erste Response erzeugt, indem die PUF mindestens einmal mit einer ersten Challenge beaufschlagt wird. Ebenso wird mindestens eine zweite Response aus einer zweiten Challenge erzeugt. Aus der jeweiligen Response wird eine jeweilige Kategorisierungsinformation abgeleitet. Dabei kann eine beliebige Response, welche bei Beaufschlagen der PUF erzeugt wird, zum Ableiten einer Kategorisierungsinformation verwendet werden.

Eine Kategorisierungsinformation kennzeichnet die Zugehörigkeit zu einer von mindestens zwei Kategorien hinsichtlich einer statistischen Schwankung. Das heißt für jede festlegbare Kategorie ist mindestens ein Schwellenwert vorgegeben, der die Zugehörigkeit einer Response zu einer Kategorie bei Über- oder Unterschreiten des Schwellenwertes festlegt.

Als statistische Schwankung wird in der vorliegenden Anmeldung eine Eigenschaft der Response bezeichnet, welche insbesondere nicht mittels einer auf einer anderen Hardware realisierten PUF reproduzierbar ist und welche kennzeichnend ist für eine Eigenschaft der Hardware. Dabei ist insbesondere das Responseverhalten einer auf einem Gerät realisierten PUF beim Beaufschlagen mit einer einzelnen Challenge mehrmals hintereinander spezifisch für die Hardware des Gerätes und nicht auf einfache Weise durch eine nachgebaute Hardware zu erzeugen. Das statistische Verhalten der PUF Responses ist somit das kennzeichnende gerätespezifische Merkmal.

Unter einer statistischen Schwankung wird ferner eine Eigenschaft einer mehrbittigen, d.h. mehrere Bits umfassenden Response bezeichnet. Beispielsweise wird dabei eine Eindeutigkeit der Response ausgewertet, d.h. eine Auswertung der erhaltenen Response hinsichtlich einer 0/1 Verteilung der in der Response enthaltenen Binärwerte. Es wird beispielsweise ausgewertet, ob die Mehrzahl der enthaltenen Bits zu einer 0 oder zu einer 1 tendiert. Ferner kann die Bitfehlerverteilung bei mehrbittigen Responses und mehrmaligem Beaufschlagen der PUF mit einer einzelnen Challenge untersucht werden. So kann insbesondere die Häufigkeit oder Stabilität auftretender Bitmuster für die Zuordnung zu einer Kategorie durch Vergleich mit einem Schwellenwertes einer Kategorie verwendet werden. Die Kategorisierungsinformation wird aus der zugeordneten Kategorie abgeleitet. Dabei können im Falle von mehr als zwei Kategorien auch mehrere Kategorien zu einer gemeinsamen Kategorisierungsinformation führen. Die Kategorisierungsinformation ist insbesondere in Dualziffern, d.h. 0 oder 1, dargestellt.

Aus mindestens zwei Kategorisierungsinformationen wird der gerätespezifische Wert abgeleitet. Beispielsweise werden zunächst identische Kategorisierungsinformationen, welche aufeinander folgen, auf ihr Verhältnis zueinander hin untersucht. Findet ein Wechsel der Kategorisierungsinformation statt, d.h. beispielsweise ein Wechsel von 0 auf 1 oder von 1 auf 0, so wird aus der ersten Kategorisierungsinformation und der zweiten Kategorisierungsinformation, d.h. aus zwei Bits, mindestens ein Bit an Information gewonnen, welches weiterverarbeitet wird zu dem gerätespezifischen Wert. Der Wechsel der Kategorisierungsinformation ist die Information über die statistische Schwankung und aus dem statistischen Verhalten wird der gerätespezifische Wert abgeleitet.

Die Charakterisierung der Response hinsichtlich einer statistischen Schwankung ermöglicht die Ermittlung eines gerätespezifischen Wertes auch in Fällen, in welchen ein reproduzierbarer gerätespezifischer Wert für eine gegebene Konfiguration einer PUF sonst nur unter Zuhilfenahme eines Fehlerkorrekturcodeverfahrens ermittelt werden könnte. Durch die Auswertung eines Verhältnisses von Kategorisierungsinformationen, beispielsweise innerhalb einer vorgebbaren Blockbreite oder innerhalb einer variablen Blockbreite, wird die Anforderung an den gerätespezifischen Wert, unabhängig und identisch verteilt zu sein, erfüllt. Diese Anforderung an den gerätespezifischen Wert stellt dessen Eignung für die Erzeugung von Schlüsselbits für kryptographische Schlüssel sicher oder ermöglicht die Verwendung für die Integritätsprüfung einer Hardware.

Es wird somit ein gerätespezifischer Wert erzeugt, zum Ableiten eines Schlüssels oder eines Identifiers, der auf sichere Weise nur auf einem dafür vorgesehenen Gerät mit spezifischen Hardware-Eigenschaften und gleichzeitig in einem ressourcensparendes Verfahren erzeugt werden kann.

Vorteilhaft werden mehr als zwei Challenges verwendet, welche in der oben beschriebenen Weise zur Erzeugung von mehr als zwei Responses eingesetzt werden. So ist die Größe der im Verfahren erzeugten Anzahl gerätespezifischer Werte beeinflussbar.

Je nachdem, wie hoch die Entropie je gerätespezifischem Wert ist, kann ein Nachbearbeitungsverfahren sinnvoll angeschlossen werden.

Gemäß einer Ausgestaltung wird zum Ableiten der jeweiligen Kategorisierungsinformation die jeweilige Response hinsichtlich einer Stabilität, einer Eindeutigkeit, eines Hamming-Gewichtes oder eines Bias der jeweiligen durch mindestens einen vorgebbaren Schwellenwert festgelegten Kategorie zugeordnet. Eine Stabilität einer Response wird durch die Auswertung einer einbittigen oder mehrbittigen, d.h. aus einem Bit oder mehreren Bits bestehenden Response bei mehrmaligem Beaufschlagen der PUF mit einer identischen Challenge ermittelt. Es ist eine Unterteilung von Stabilitätskategorien vorgesehen und je nach Häufigkeit des auftretenden Bitmusters wird der zu einer Challenge gehörigen Response eine Stabilität zugewiesen.

Eine Eindeutigkeit der Response kann in einem einfachen Fall eine Unterteilung in die Kategorien Bias zu 0 oder Bias zu 1 vorsehen. Zu 0 bedeutet dabei, dass die Response anteilig öfter den Wert 0 als den Wert 1 aufweist oder anders herum. Bei der Analyse des Hamming-Gewichts der Response kann beispielsweise abhängig von der Anzahl der Bits mit dem Wert 1 oder 0 eine Zuordnung zu einer der Kategorien strong zero, weak zero, equal, weak one, strong one vorgenommen werden. Es können beispielsweise für fünf Kategorien vier Schwellenwerte vorgegeben werden, welche die Kategorien voneinander trennen. Bei der Ermittlung eines Bias, wobei die Tendenz der Response zu einem der Werte 0 oder 1 analysiert wird, kann insbesondere ein einzelner Schwellenwert vorgesehen sein, der bei Überschreiten anzeigt, dass ein Bias vorliegt.

Als Schwellenwert dient beispielsweise eine Angabe, wie viele der je Response vorhandenen Bits eine 0 oder eine 1 sein müssen. Der Wert kann ebenso in Form einer Prozentzahl angegeben sein. Wird eine statistische Verteilung mehrerer Responses bei Beaufschlagung der PUF mit einer einzelnen Challenge untersucht, so wird der Schwellenwert vorteilhafter Weise in Form einer Angabe ausgestaltet, bei wie viel Prozent übereinstimmender Bitmuster eine Stabilität der zu der Challenge gehörigen Responses erkannt wird.

Je nach Response-Verhalten einer verwendeten PUF werden die Kategorisierungsinformationen anhand von einer geeigneten Struktur der Kategorien ermittelt.

Gemäß einer Ausgestaltung werden zum Ableiten des gerätespezifischen Wertes ferner folgende Schritte ausgeführt:
- Ermitteln identischer Kategorisierungsinformationen von mindestens zwei Responses aufeinander folgender Challenges durch Vergleich der jeweiligen Kategorisierungsinformationen;
- Ermitteln einer Sequenzeigenschaft einer Folge identischer Kategorisierungsinformationen.

Somit werden Sequenzen von Responses mit identischer Kategorisierungsinformation ermittelt. Treten bei aufeinanderfolgenden Challenges zugehörige Responses mit identischer Kategorisierungsinformation auf, so werden diese Responses zu einer Sequenz zusammengefasst. Dabei findet eine Datenkompression statt. Aus einer Sequenzeigenschaft dieser Sequenz wird der gerätespezifische Wert ermittelt. Eine Sequenz kann dabei eine beliebige Länge aufweisen, welche durch den nächsten auftretenden Wechsel der Kategorisierungsinformation bestimmt wird. Durch die irreversible Datenkompression ist ein Rückschluss auf die Responses aus dem gerätespezifischen Wert weiter erschwert, so dass selbst bei Kenntnis der Challenges keine Information über die Anzahl oder Eigenschaften der Responses ableitbar ist. Dies erhöht beispielsweise die Sicherheit vor Missbrauch durch PUF-Modelle. In einer Variante wird aus einer Position auftretender Wechsel in der Kategorisierungsinformation der zugehörige Zählerstand eines Sequenzzählers des Challengeerzeugers ermittelt. Es kann insbesondere der auf den Wechsel folgende Zählerstand verwendet werden, um aus den Kategorisierungsinformationen den gerätespezifischen Wert abzuleiten. Beispielsweise wird das unterste Bit des so ermittelten Zählerstandes ausgegeben.

Gemäß einer Ausgestaltung wird als Sequenzeigenschaft der Folge identischer Kategorisierungsinformationen ein niederwertigstes Bit einer Binärdarstellung einer Länge der Folge verwendet.

Als Sequenzeigenschaft kann somit die Information verwendet werden, ob die Länge einer Sequenz ein gerader oder ungerader Wert ist. Das als Sequenzeigenschaft ermittelte Bit kann dann direkt als gerätespezifischer Wert verwendet werden. Je nach Anwendungsgebiet kann der aus den mindestens zwei Challenges und den daraus ermittelten mindestens zwei Responses ermittelte gerätespezifische Wert als ein Bit eines kryptographischen Schlüssels verwendet werden oder als ein Wert einer Bitfolge zur Überprüfung einer Authentizität einer Hardware.

Das Ermitteln der Länge der Folge ist auf einfache Weise realisierbar und die Verwendung der Information über das niederwertigste Bit der Binärdarstellung der Länge gewährleistet die Irreversibilität bei der Ermittlung der Sequenzeigenschaft.

Die Verwendung von mehr als zwei Challenges ist vorteilhaft. Die Länge der Folge identischer Kategorisierungsinformationen ist abhängig von dem nächsten auftretenden Wechsel in der Kategorisierung der Response. Somit legt eine Challenge den Beginn einer neuen, anschließenden Sequenz fest, wenn sie eine Response mit anderer Kategorisierungsinformation erzeugt. Die Anzahl benötigter Challenges zur Generierung einer benötigten Anzahl gerätespezifischer Werte wird somit durch die Wechsel der Kategorisierungsinformation bestimmt.

Gemäß einer Ausgestaltung wird zum Ableiten des gerätespezifischen Wertes ferner eine Anzahl von Wechseln der jeweiligen Kategorisierungsinformation innerhalb einer vorgebbaren Blocklänge von Responses aufeinanderfolgender Challenges ermittelt.

Insbesondere bei großen Blocklängen, beispielsweise von 16 Bit, 32 Bit, 64 Bit oder größer, wird auf vorteilhafte Weise ausgewertet, wie viele Wechsel der Kategorisierungsinformation innerhalb des festen Blocks auftreten, oder ob mindestens ein Wechsel auftritt, oder ob die Anzahl der Wechsel in der Kategorisierungsinformation einem geraden oder einem ungeraden Wert entsprechen. Auch hierbei findet eine Datenkompression statt, welche nicht reversibel ist und keinen Rückschluss auf das Challenge-Response-Verhalten einer PUF auf Grundlage des gerätespezifischen Wertes oder des daraus erzeugten Schlüssels erlaubt.

Gemäß einer Ausgestaltung werden zwei oder mehr Kategorien jeweils durch einen oder mehr Schwellenwerte festgelegt. Durch die Vorgabe mehrerer Kategorien kann die Kategorisierungsinformation aus einem Muster von Charakterisierungen abgeleitet werden. Beispielsweise werden in einer Variante die Kategorien strong low, weak low, equal, weak high und strong high festgesetzt, in welche die jeweilige Response je nach ihrem Hamming-Gewicht eingeordnet wird. Strong low und weak low werden beispielsweise als äquivalent betrachtet und kennzeichnen eine Überzahl an 0-Bits in der Response. Die Kategorie equal bedeutet Gleichverteilung an 0-Bits und 1-Bits. Diese Kategorie wird beispielsweise für die Ableitung des gerätespezifischen Wertes ignoriert. Die Kategorien weak high und strong high stehen entsprechend für eine Dominanz von 1-Werten in einer Response und können entsprechend äquivalent betrachtet werden. Somit wird bei der Bestimmung der Länge einer Sequenz mit gleicher Charakterisierung ein Wechsel zwischen low dominierten Folgen und high dominierten Folgen analysiert.

In einer anderen Variante werden die jeweils eindeutigeren Charakterisierungen strong low und strong high als Ausgangspunkt für die Analyse verwendet. Die Weak-Charakterisierungen weak low und weak high werden dagegen als uneindeutig gewertet. In diesen Fällen kann eine Ableitung des gerätespezifischen Wertes versuchsweise mit beiden denkbaren Möglichkeiten der Charakterisierung erfolgen. Das heißt eine Weak-Charakterisierung wird einmal probehalber mit der zugeordneten Strong-Charakterisierung ersetzt und einmal mit einer Equal-Charakterisierung. Dies wird rekursiv für weitere Abschnitte der Folge wiederholt. Die so ermittelten alternativen Schlüsselbits werden beide zur Erzeugung eines kryptographischen Schlüssels verwendet und es entstehen dadurch mehrere Schlüsselkandidaten. Anhand von verschlüsselten Testdaten kann durch Ausprobieren der mehreren Schlüsselkandidaten bestimmt werden, welcher der korrekte Schlüssel ist. In einer weiteren Variante werden mehrere Schlüsselkandidaten nach einem vorgebbaren Ordnungskriterium sortiert. Insbesondere wird das erste, der letzte oder der mittlere Schlüsselkandidat verwendet. In einer weiteren Variante werden die Nachbarschlüssel verwendet. So kann aus einer Menge von Schlüsselkandidaten nach einem festen Kriterium ein Schlüssel ausgewählt werden. So kann z.B. bei der erstmaligen Erzeugung eines Schlüssels deterministisch ein Schlüssel aus der Menge der Schlüsselkandidaten bestimmt werden.

Auch ist es möglich, bei einer Weak-Charakterisierung versuchsweise auch eine Ableitung des gerätespezifischen Wertes versuchsweise unter Verwendung der komplementäre Charakterisierung zu versuchen, d.h. Low bei Weak-High bzw. High bei Weak-Low.

In einer weiteren Variante kann bei auftretenden Weak-Charakterisierungen die Bestimmung der Zuordnung zu der Kategorie wiederholt werden um für diese Challengewerte ggf. bei einer weiteren Abfrage der PUF eine eindeutigere Kategorie der Response zu erhalten. Beispielsweise kann für die Charakterisierung bis zu 16 mal wiederholt und geprüft werden, ob ein Ausreißer zur jeweiligen strong-Charakterisierung oder zur Kategorie equal beobachtet wird. Für diese ausgewählten, nicht eindeutigen Challengewerte wird die Kategorisierungsinformation dann aus der wiederholten Beaufschlagung der PUF mit der Challenge gewonnen.

Gemäß einer Ausgestaltung wird die jeweilige Response aus einem Bit oder aus mehreren Bits gebildet. Liefert eine PUF beim Beaufschlagen mit einer Challenge eine Response, welche aus einem Bit besteht, so kann durch wiederholtes Beaufschlagen mit der identischen Challenge eine mehrbittige Response gewonnen werden. Überdies können mehrere unterschiedliche Challenges verwendet werden, um eine mehrbittige Response zu erhalten.

Gemäß einer Ausgestaltung wird die jeweilige Response aus einem einmaligen Beaufschlagen der physikalisch unklonbaren Funktion mit der jeweiligen Challenge oder aus einem mehrmaligen Beaufschlagen der physikalisch unklonbaren Funktion mit der jeweiligen jeweils identischen Challenge ermittelt. Somit wird je nach PUF oder je nach Konfiguration einer PUF das Responseverhalten optimal zur Durchführung des vorgeschlagenen Verfahrens genutzt. Auch bei einer mehrbittigen Response ist ein mehrmaliges Beaufschlagen der PUF mit einer Challenge vorteilhaft, insbesondere, um das Stabilitätsverhalten zu ermitteln.

Gemäß einer Ausgestaltung wird der gerätespezifische Wert als ein Schlüsselbit eines kryptographischen Schlüssels verwendet. Für Verfahren zur Erzeugung eines kryptographischen Schlüssels, welche eine PUF verwenden, ist es gemäß den im Stand der Technik beschriebenen Methoden notwendig, die PUF oder die Konfiguration einer PUF oder die verwendeten Challenges dahingehend zu prüfen, dass sie Responsewerte liefern, welche keinen statistischen Schwankungen oder keine Ungleichverteilung, die als störender Effekt betrachtet werden, aufweisen. Somit sollen aufwendige Fehlerkorrekturcodeverfahren vermieden werden. Gemäß der vorgeschlagenen Ausgestaltung wird nicht der Wert der Response oder die Kategorisierungsinformation als solche verwendet, um einen gerätespezifischen Wert zu bilden. Vielmehr wird aus einer Folge von Kategorisierungsinformationen und aus statistischen Eigenschaften dieser Folgen der gerätespezifische Wert abgeleitet. Die statistischen Schwankungen oder Ungleichverteilungen beim Beaufschlagen der PUF mit der jeweiligen Challenge werden als kennzeichnendes Merkmal, welches spezifisch für das die PUF realisierende Gerät ist, genutzt. Gerade aus dieser bislang als störend erachteten Verhalten der Responses wird die Information zur Ermittlung eines gerätespezifischen Wertes gewonnen.

Je nach benötigter Schlüssellänge werden entsprechend viele gerätespezifische Werte als Schlüsselbits erzeugt. Die benötigte Länge der Challengefolge ist größer als die Bitfolge zur Generierung des Schlüssels, auch in dem Fall, dass aus einer Challenge eine Response gewonnen wird. Wird eine Response aus mehreren Challenges erstellt, so ist die Anzahl benötigter Challenges entsprechend größer.

Gemäß einer Ausgestaltung wird der gerätespezifische Wert verwendet zur Verifizierung einer Originalität des Gerätes. Eine statistische Eigenschaft, welche aus der Implementierung einer Schaltung mit der physikalisch unklonbaren Funktion resultiert, wird dabei als Unterscheidungskriterium verwendet zur Prüfung der Originalität der Hardwareschaltung. Die Prüfung kann dabei insbesondere darin bestehen, als Antwort auf eine Folge von Challenges eine Folge aus gerätespezifischen Werten bereitzustellen. Diese Folge aus gerätespezifischen Werten ist dabei aufgrund der stattfindenden Datenkompression kürzer als die Challengefolge.

Das vorgeschlagene Verfahren sowie die beschriebenen Ausgestaltungen sind insbesondere vorteilhaft anwendbar bei PUFs, die einen Challengeraum bieten, der deutlich größer ist als die Länge des zu erzeugenden Identifizierers aus den gerätespezifischen Werten. Gerade bei sogenannten strong PUFs, die einen exponentiell zu ihren physikalischen Abmessungen skalierenden Challengeraum bieten, ist dies der Fall. Somit wird die im Stand der Technik notwendige aufwendige Fehlerkorrektur ersetzt durch einen im Vergleich dazu vernachlässigbar größeren Aufwand bei der Beaufschlagung der PUF mit einer vermehrten Anzahl an Challenges. Der Hardwareaufwand für dieses Verfahren ist somit sehr viel geringer als der Aufwand, der notwendig wäre, um übliche kryptographische Nachbearbeitungsverfahren oder Fehlerkorrekturcodes zu implementieren.

Die Erfindung betrifft ferner eine Vorrichtung mit einer Schaltkreiseinheit aufweisend mindestens eine physikalisch unklonbare Funktion zum Ableiten eines gerätespezifischen Wertes, die Vorrichtung umfassend:
- Einen Challengeerzeuger zum Erzeugen von mindestens zwei Challenges;
- Die Schaltkreiseinheit einer jeweiligen Response zum Beaufschlagen der physikalisch unklonbaren Funktion mit der jeweiligen Challenge;
- Einen Response-Kategorisierer zum Ableiten einer jeweiligen Kategorisierungsinformation aus einer jeweiligen Response durch ein Zuordnen der jeweiligen Response zu einer jeweiligen durch mindestens einen vorgebbaren Schwellenwert festgelegten Kategorie hinsichtlich einer statistischen Schwankung;
- Eine Ableitungseinheit zum Ableiten des gerätespezifischen Wertes aus mindestens zwei der jeweiligen Kategorisierungsinformationen.

Gemäß einer Weiterbildung weist die Vorrichtung ferner einen Segmentierer auf zum Ermitteln identischer Kategorisierungsinformationen von mindestens zwei Responses aufeinanderfolgender Challenges durch Vergleich der jeweiligen Kategorisierungsinformation.

Gemäß einer Weiterbildung weist die Vorrichtung ferner einen Sequenzlängenbestimmer auf zum Ermitteln einer Länge einer Folge identischer Kategorisierungsinformationen und Bestimmen eines niederwertigstes Bits einer Binärdarstellung der Länge zum Bereitstellen als gerätespezifischen Wert.

Die Erfindung wird nachfolgend anhand von Ausführungsbeispielen mit Hilfe der Figuren näher erläutert.

Es zeigen:
- Figur 1: eine schematische Darstellung des Verfahrens zum Ableiten eines gerätespezifischen Wertes sowie der Vorrichtung zum Ableiten eines gerätespezifischen Wertes gemäß einem ersten Ausführungsbeispiel der Erfindung;
- Figur 2: eine schematische Darstellung eines Abschnitts des Verfahrens zum Ableiten eines gerätespezifischen Wertes sowie der Vorrichtung zum Ableiten eines gerätespezifischen Wertes gemäß einem zweiten Ausführungsbeispiel der Erfindung;

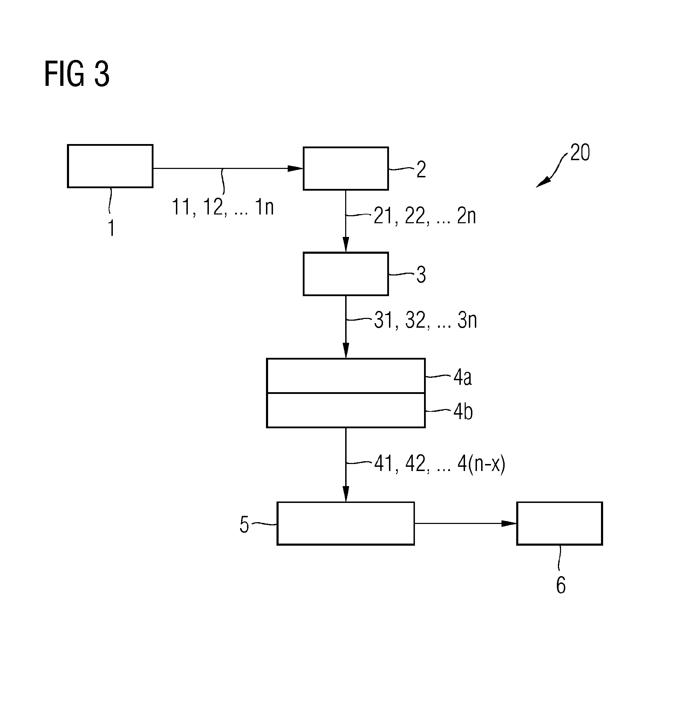

- Figur 3: eine schematische Darstellung des Verfahrens zum Ableiten eines gerätespezifischen Wertes sowie der Vorrichtung zum Ableiten eines gerätespezifischen Wertes gemäß einem dritten Ausführungsbeispiel der Erfindung.

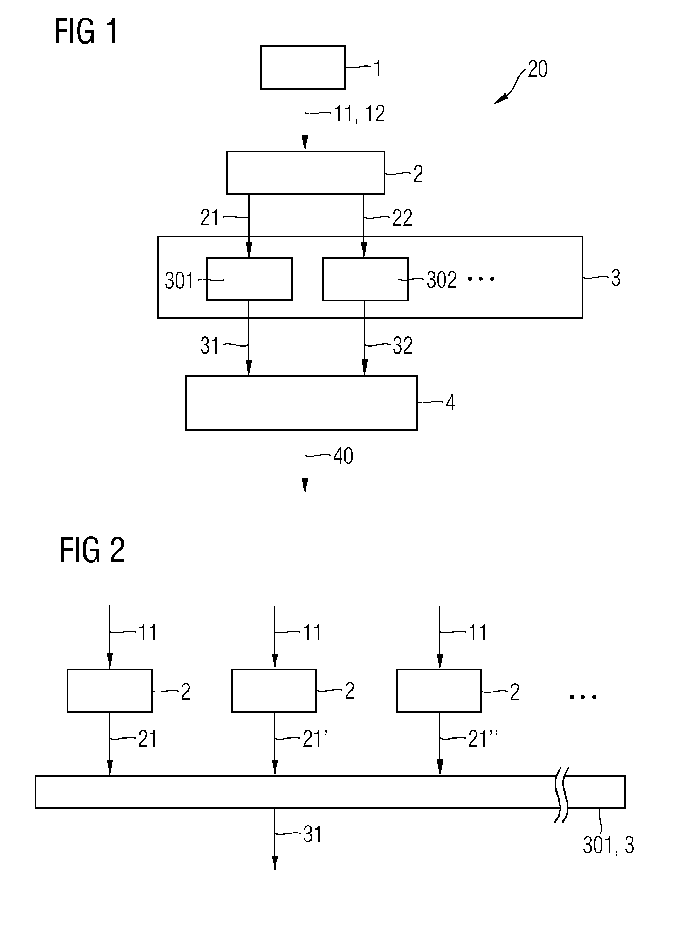

In der Figur 1 ist eine schematische Darstellung einer Vorrichtung 20 mit einer Schaltkreiseinheit 2, einem Challengeerzeuger 1, einem Response-Kategorisierer 3 und einer Ableitungseinheit 4 gemäß einem ersten Ausführungsbeispiel der Erfindung gezeigt. Der Challengeerzeuger 1 generiert eine Folge von Challenges 11, 12 zum Beaufschlagen der physikalisch unklonbaren Funktion auf dem Schaltkreis 2 mit den jeweiligen Challenges 11, 12 der Challengefolge. Vorteilhafter Weise werden durch den Challengeerzeuger 1 bis zu mehrere 100 Challenges erzeugt. Zu allen erzeugten Challenges 11, 12 wird eine Response 21, 22 als Antwort auf die jeweilige Challenge 11, 12 durch die Schaltkreiseinheit 2 ausgegeben.

Es erfolgt nun eine Charakterisierung aller Responses 21, 22. Eine Response 21, 22 welche aus 8 Bit besteht, wird hinsichtlich eines vorhandenen Bias analysiert. Enthält die Response 21 mehr als eine vorgegebene Anzahl nullwertiger Bits der 8 Bit, z.B. mehr als 5 0-Bit, so wird die Response 21 einer ersten Kategorie 301 zugeordnet. Übersteigt die Anzahl der einwertigen Bits in der Response 22 dagegen einen vorgegebenen Grenzwert, so wird die Response 22 in eine zweite Kategorie 302 eingeteilt. Alle gebildeten Responses 21, 22 werden auf diese Weise einer der beiden Kategorien 301, 302 zugeordnet.

Es erfolgt nun eine Segmentierung der durch die Zuordnung zu einer der Kategorien 301, 302 entstandenen Folge aus Kategorisierungsinformationen 31, 32. Dabei werden Segmente oder Abschnitte nach einem vorgegebenen Kriterium gebildet. Es wird auf vorteilhafter Weise die Identität aufeinanderfolgender Kategorisierungsinformationen 31, 32 ermittelt und die Länge einer Folge identischer Kategorisierungsinformationen ermittelt. Ein Wechsel findet statt, wenn zwei Responses 21, 22 aus benachbarten Challenges 11, 12 der Challengefolge unterschiedlichen Kategorien 301, 302 zugeordnet wurden. Als Ableitungsvorschrift für die Ableitung des gerätespezifischen Wertes 40 durch die Ableitungseinheit 4 wird beispielsweise das niederwertigste Bit einer Binärdarstellung der Segmentlänge verwendet. Das heißt bei einer ungeraden Segmentlänge ergibt sich das Bit 1, bei einer geraden Segmentlänge das Bit 0 als gerätespezifischer Wert 40. Dieser Wert wird als ein Schlüsselbit verwendet und aus einer Konkatenation aller auf diese Weise erzeugbaren gerätespezifischen Werte aus einer vorgegebenen Folge von Challenges wird ein kryptographischer Schlüssel gebildet.

In einem zweiten Ausführungsbeispiel der Erfindung wird eine Stabilität einer vorgegebenen Challenge untersucht und für das Ableiten eines gerätespezifischen Wertes verwendet.

Figur 2 zeigt das schematische Verfahren, bei welchem eine physikalisch unklonbare Funktion mehrfach mit einer identischen Challenge 11 beaufschlagt wird, um aus den daraus gewonnenen Responses 21, 21', 21'' eine Kategorisierungsinformation 31 zu erhalten. Wird die verwendete Challenge 11 durch das mehrfache Abfragen der Schaltkreiseinheit 2 mit dem gleichen Challengewert 11 durch einen Response-Kategorisierer 3 als stabil erkannt, weil in einem festlegbaren Prozentsatz der ermittelten Responses eine Übereinstimmung besteht, so werden die Responses 21, 21', 21'' einer ersten Kategorie 301 zugeordnet. Beispielsweise müssen 80% der erhaltenen Responses eine Übereinstimmung aufweisen, um als stabile Responses der ersten Kategorie 301 zugeordnet zu werden. Auf diese Weise wird für die Challenge 11 ein Responsesatz gebildet, welcher zu einer Kategorisierungsinformation 31 führt.

Gemäß einem dritten Ausführungsbeispiel der Erfindung sind als Bestandteil einer Vorrichtung 20 ein Segmentierer 4a sowie ein Sequenzlängenbestimmer 4b vorgesehen zum Durchführen des vorgeschlagenen Verfahrens gemäß einem dritten Ausführungsbeispiel der Erfindung.

Ein Challengeerzeuger 1 liefert einer Schaltkreiseinheit 2 mit darauf befindlicher PUF Challenges 11, 12,... In, zur Veranschaulichung beispielsweise 9 Challenges, wobei der Wert vorteilhafter Weise in der Größenordnung mehrerer 100 oder 1000 Challenges liegt. Aus den Challenges 11, 12,... In werden mittels der PUF Responses 21, 22,... 2n erzeugt, welchen mittels eines Response-Kategorisierers 3 gemäß einem der oben beschriebenen Varianten entsprechende Kategorisierungsinformationen 31, 32,... 3n zugeordnet werden.

Der Segmentierer 4a ermittelt identische Kategorisierungsinformationen 31, 32,... 3n von den neun Responses aufeinanderfolgender 9 Challenges durch Vergleich der jeweiligen Kategorisierungsinformation. Beispielsweise ermittelt der Segmentierer dabei vier Segmente, d.h. drei auftretende Wechsel innerhalb der Folge der neun Responses. Ein Sequenzlängenbestimmer 4b ermittelt eine Länge einer Folge identischer Kategorisierungsinformationen, d.h. eine Segmentlänge. Beispielsweise erhält man so die Längen drei, zwei, drei und eins für die vier Segmente. Daraus wird durch den Sequenzlängenbestimmer 4b das jeweils niederwertigste Bit einer Binärdarstellung der jeweiligen Länge bestimmt. Im aufgeführten Beispiel erhält man so die Werte 1, 0, 1, 1 als Schlüsselbits. Diese Bits stellen jeweils einen gerätespezifischen Wert 41, 42,... (n-x) dar. Im beschriebenen Beispiel werden also vier gerätespezifische Werte ermittelt. In der Regel - und als Grundlage für eine ausreichend große Entropie - ist die Anzahl n-x der auf diesem Weg erzeugten gerätespezifischen Werte 41, 42,... (n-x) deutlich kleiner als die Anzahl n der Responses 21, 22,... 2n.

Ein 64-Bit langer Schlüssel wird mittels eines Schlüsselerzeugers 5 durch Konkatenation der einzelnen gerätespezifischen Werte 41, 42,... (n-x) erzeugt. Dafür wird eine ausreichend große Anzahl an Responses 21, 22,... 2n und entsprechend an Challenges 11, 12,... In benötigt. Zum Abspeichern des Schlüssels weist die Vorrichtung 20 ferner einen Schlüsselspeicher 6 auf, welcher ein volatiler Speicher ist, der ohne Stromversorgung den Speicherinhalt verliert. Es kann sich dabei um ein Register aus D-Flip-Flops oder um einen SRAM-Speicher handeln.

Durch das vorgeschlagene Verfahren und die vorgeschlagene Vorrichtung wird eine Schaltkreiseinheit mit darauf befindlicher physikalisch unklonbarer Funktion auf besonders einfache Weise zur Schlüsselerzeugung oder zur Authentizitätsprüfung verwendet. Der Hardwareaufwand ist dabei besonders gering und aufwendige kryptographische Nachbearbeitungsverfahren oder Fehlerkorrekturcodes zur Sicherstellung eines rekonstruierbaren Schlüssels oder zur Vermeidung von Fehlalarmen bei der Authentizitätsprüfung werden vorteilhaft vermieden.

Die jeweiligen Vorrichtungsbestandteile, zum Beispiel Challengeerzeuger, Responsekategorisierer, Ableitungseinheit, Segmentierer oder Sequenzlängenbestimmer, können hardwaretechnisch und/oder auch softwaretechnisch implementiert sein. Bei einer hardwaretechnischen Implementierung kann die jeweilige Einrichtung zum Beispiel als Bestandteil eines Computers oder als Mikroprozessor oder Teil eines Mikroprozessors ausgebildet sein. Bei einer softwaretechnischen Implementierung kann die jeweilige Einrichtung als Computerprogrammprodukt, als eine Funktion, als eine Routine, als Teil eines Programmcodes oder als ausführbares Objekt ausgebildet sein.

## Patentansprüche

1. Verfahren zum Ableiten eines gerätespezifischen Wertes (40) aus einer auf einer Schaltkreiseinheit (2) realisierten physikalisch unklonbaren Funktion, aufweisend die folgenden Schritte:
- Ermitteln einer ersten Response (21) aus einem mindestens einmaligen Beaufschlagen der physikalisch unklonbaren Funktion mit einer ersten Challenge (11);
- Ermitteln mindestens einer zweiten Response (22) aus einem mindestens einmaligen Beaufschlagen der physikalisch unklonbaren Funktion mit einer zweiten Challenge (12);
- Ableiten einer jeweiligen Kategorisierungsinformation (31, 32) aus einer jeweiligen Response (21, 22) durch ein Zuordnen der jeweiligen Response (21, 22) zu einer von mindestens zwei jeweiligen Kategorien (301, 302) hinsichtlich einer statistischen Schwankung, wobei die jeweiligen Kategorien durch mindestens einen vorgebbaren Schwellenwert festgelegt werden;
- Ableiten des gerätespezifischen Wertes (40) aus mindestens zwei der jeweiligen Kategorisierungsinformationen (31, 32).

2. Verfahren nach Anspruch 1, wobei zum Ableiten der jeweiligen Kategorisierungsinformation (31, 32) die jeweilige Response (21, 22) hinsichtlich einer Stabilität, einer Eindeutigkeit, eines Hamming-Gewichtes oder eines Bias der jeweiligen durch mindestens einen vorgebbaren Schwellenwert festgelegten Kategorie (301, 302) zugeordnet wird.

3. Verfahren nach Anspruch 1 oder 2, wobei zum Ableiten des gerätespezifischen Wertes (40) ferner folgende Schritte ausgeführt werden:
- Ermitteln identischer Kategorisierungsinformationen von mindestens zwei Responses (21, 22) aufeinanderfolgender Challenges (11, 12) durch Vergleich der jeweiligen Kategorisierungsinformation (31, 32);
- Ermitteln einer Sequenzeigenschaft einer Folge identischer Kategorisierungsinformationen.

4. Verfahren nach Anspruch 3, wobei als Sequenzeigenschaft der Folge identischer Kategorisierungsinformationen ein niederwertigstes Bit einer Binärdarstellung einer Länge der Folge verwendet wird.

5. Verfahren nach einem der Ansprüche 1 bis 3, wobei zum Ableiten des gerätespezifischen Wertes (40) ferner eine Anzahl von Wechseln der jeweiligen Kategorisierungsinformation (31, 32) innerhalb einer vorgebbaren Blocklänge von Responses (21, 22) aufeinanderfolgender Challenges (11, 12) ermittelt wird.

6. Verfahren nach einem der vorstehenden Ansprüche, wobei zwei oder mehr Kategorien (301, 302) jeweils durch einen oder mehr Schwellenwerte festgelegt werden.

7. Verfahren nach einem der vorstehenden Ansprüche, wobei die jeweilige Response (21, 22) aus einem Bit oder aus mehreren Bits gebildet wird.

8. Verfahren nach einem der vorstehenden Ansprüche, wobei die jeweilige Response (21, 22) aus einem einmaligen Beaufschlagen der physikalisch unklonbaren Funktion mit der jeweiligen Challenge (11, 12) oder aus einem mehrmaligen Beaufschlagen der physikalisch unklonbaren Funktion mit der jeweiligen Challenge (11) ermittelt wird.

9. Verfahren nach einem der vorstehenden Ansprüche, wobei der gerätespezifische Wert (40) als ein Schlüsselbit eines kryptographischen Schlüssels verwendet wird.

10. Verfahren nach einem der vorstehenden Ansprüche, wobei der gerätespezifische Wert (40) verwendet wird zur Verifizierung einer Authentizität der Schaltkreiseinheit (2).

11. Vorrichtung (20) mit einer Schaltkreiseinheit (2) aufweisend mindestens eine physikalisch unklonbare Funktion zum Ableiten eines gerätespezifischen Wertes (40), die Vorrichtung (20) umfassend:
- einen Challengeerzeuger (1) zum Erzeugen von mindestens zwei Challenges (11, 12);
- die Schaltkreiseinheit (2) zum Erzeugen einer jeweiligen Response (21, 22) beim Beaufschlagen der physikalisch unklonbaren Funktion mit der jeweiligen Challenge (11, 12);
- einen Responsekategorisierer (3) zum Ableiten einer jeweiligen Kategorisierungsinformation (31, 32) aus einer jeweiligen Response (21, 22) durch ein Zuordnen der jeweiligen Response (21, 22) zu einer jeweiligen durch mindestens einen vorgebbaren Schwellenwert festgelegten Kategorie (31, 302) hinsichtlich einer statistischen Schwankung;
- eine Ableitungseinheit (4) zum Ableiten des gerätespezifischen Wertes (40) aus mindestens zwei der jeweiligen Kategorisierungsinformationen (31, 32).

12. Vorrichtung nach Anspruch 11, ferner aufweisend einen Segmentierer (4a) zum Ermitteln identischer Kategorisierungsinformationen von mindestens zwei Responses (21, 22) aufeinanderfolgender Challenges (11, 12) durch Vergleich der jeweiligen Kategorisierungsinformation (31, 32).

13. Vorrichtung nach Anspruch 12, ferner aufweisend einen Sequenzlängenbestimmer (4b) zum Ermitteln einer Länge einer Folge identischer Kategorisierungsinformationen und Bestimmen eines niederwertigstes Bits einer Binärdarstellung der Länge zum Bereitstellen als gerätespezifischen Wert (40).
